# DEMANDE DE BREVET EUROPEEN

(11) **EP 1 160 495 A1**
(43) Date de publication de la demande: **05.12.2001**
(21) Numéro de dépôt: 00870120.3
(22) Date de dépôt: 31.05.2000
(51) Int. Cl.: F16K 41/10, F16K 41/12

(54) **Dispositif d'étancheité destiné à un organe de régulation**

(71) Demandeur: Techspace Aero S.A., 4041 Herstal (BE)
(72) Inventeur: Delobel, Pierre, 4031 Angleur (BE); Drapier, Jean-Marie, 1030 Bruxelles (BE); De Lamotte, Emmanuel, 4000 Liège (BE)
(74) Mandataire: Van Malderen, Joelle

(57) **Abrégé**

La présente invention se rapporte à un joint (6) métallique ou céramique revêtu d'une couche mince d'un revêtement présentant un coefficient de frottement inférieur à 0,05.

Un exemple préféré de revêtement est le sulfure de molybdène sous la forme MoSₓ où 1,5 ≤ x ≤ 2, et de préférence où x est proche de 1,6.

## Description

### Objet de l'invention

Le domaine considéré ici est celui des organes de régulation et des vannes présentant au moins une partie mobile et soumis à des conditions extrêmes d'utilisation. Parmi ces conditions figurent les pressions élevées, les températures très basses ou très hautes ainsi que l'utilisation de fluides agressifs.

La présente invention a plus particulièrement pour objet un dispositif d'étanchéité destiné à être utilisé dans un organe de régulation ou une vanne qui devrait pouvoir supporter des conditions extrêmes d'utilisation.

### Etat de la technique

Beaucoup d'équipements utilisés dans l'aéronautique et dans l'aérospatial sont des systèmes pneumatiques ou hydrauliques utilisant des vannes présentant un joint d'étanchéité disposé sur un support éventuellement mobile. Ces vannes doivent pouvoir résister à des conditions extrêmes d'utilisation.

Un exemple connu de telles vannes est la vanne à boisseau sphérique, qui comprend essentiellement un corps de vanne dans lequel un obturateur se présentant sous la forme d'une calotte sphérique munie d'un passage est actionné. Habituellement, un joint est fixé de manière rigide sur le support éventuellement mobile à l'arrière ou à l'avant du boisseau et permet d'assurer ainsi l'étanchéité de l'amont de la vanne vis-à-vis de l'aval de celle-ci lorsque la vanne est fermée. Lors de la fermeture de la vanne, le joint entre en contact avec ladite surface de contact sphérique du boisseau.

Il est également connu d'utiliser des vannes à obturateur mobile telles que des vannes à papillon, qui permettent d'obtenir une perte de charge au sein du conduit par le mouvement de l'obturateur. Cet obturateur est commandé par un arbre dont l'étanchéité par rapport à la vanne doit être assurée. Dans ce but, un dispositif d'étanchéité muni d'un joint d'étanchéité est prévu. Etant donné les conditions extrêmes dans lesquelles on veut travailler, le joint est habituellement un joint en carbone ou un joint métallique qui par une surface de contact entre l'arbre de la vanne et une bague, permet d'assurer l'étanchéité.

L'étanchéité doit être assurée de manière dynamique, vu le mouvement de rotation des pièces. La surface de contact doit être calculée et optimisée pour trouver un compromis entre une étanchéité importante et un faible frottement entre les pièces en mouvement.

### Buts de l'invention

L'invention a pour but de proposer un dispositif d'étanchéité, par exemple de l'arbre de vanne ou de l'organe de régulation, comprenant entre autres un joint d'étanchéité ayant un comportement tribologique adéquat, c'est-à-dire un comportement qui présente un bon compromis entre le caractère de lubrification élevé et le caractère de résistance à l'usure faible.

Plus précisément, l'invention a pour but de proposer un dispositif d'étanchéité permettant de résister à des conditions extrêmes de température et/ou de pression et/ou de nature du fluide.

### Principaux éléments caractéristiques de l'invention

La présente invention se rapporte à un joint métallique ou céramique revêtu d'une couche mince d'un revêtement présentant un coefficient de frottement inférieur à 0,05. De préférence, l'épaisseur du revêtement est inférieure à 50 µm, et de préférence inférieure à 30 *µ*m.

Avantageusement, le revêtement dudit joint est essentiellement constitué de sulfure de molybdène sous la forme MoSₓ où 1,5 ≤ x < 2, et de préférence, x est compris entre 1,5 et 1,7.

Un autre exemple de revêtement est le nitrure de carbone.

Selon une première forme d'exécution, la nature du joint est métallique, et de préférence choisie parmi le groupe constitué par l'acier, le titane, l'aluminium, le cuivre, le nickel et leurs alliages.

Selon une autre forme d'exécution, caractérisé en ce que la nature du joint est céramique.

La présente invention se rapporte également à un organe de régulation comprenant un corps de vanne, un arbre de commande, un obturateur mobile, une bague solidaire d'un soufflet métallique et qui permet d'assurer la liaison avec ledit corps de vanne, ladite bague s'appuyant sur un joint métallique ou céramique pourvu d'un revêtement, caractérisé en ce que le revêtement présente un coefficient de friction inférieur à 0,05.

De préférence, le revêtement dudit joint est essentiellement constitué de sulfure de molybdène sous la forme MoSₓ où 1,5 ≤ x < 2.

Enfin, la présente invention se rapporte à l'utilisation d'un joint selon l'invention destiné à assurer l'étanchéité d'un organe de régulation aux températures cryogéniques ou aux températures comprises entre 200 et 800 °C, et à des pressions comprises entre 10 et 20 MPa.

### Brève description des dessins

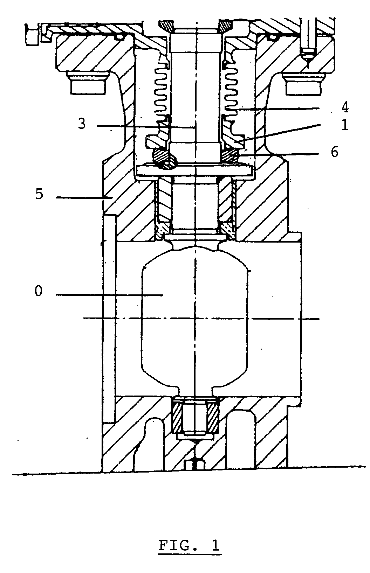

La figure 1 représente une vue en coupe d'une vanne à obturateur mobile présentant un dispositif d'étanchéité selon la présente invention.

### Description détaillée d'une forme préférée de l'invention

La figure 1 décrit un organe de régulation, et plus précisément une vanne à obturateur mobile correspondant à une vanne à papillon qui permet, par le mouvement de cet obturateur 0 d'augmenter la perte de charge au sein d'un conduit. Cet obturateur 0 est commandé par un arbre 3. Etant donné que les pièces sont en mouvement au sein même de la vanne, il est nécessaire de prévoir un dispositif d'étanchéité qui comprend en particulier une bague 1 en appui sur un joint d'étanchéité 2. La bague 1 est solidaire d'un soufflet métallique 4 qui assure la liaison avec le corps de vanne 5.

Etant donné que le type d'organe de régulation envisagé doit fonctionner dans des conditions extrêmes de température et/ou de pression, une solution est d'utiliser un joint métallique ou céramique. Le joint métallique peut être en acier, en aluminium, en titane, en cuivre, en nickel ou dans un de leurs alliages.

Un exemple de céramique pour cette application est le zircone (ZrO₂).

L'originalité du joint métallique ou céramique selon l'invention est qu'il est revêtu d'une fine couche d'un revêtement qui présente un faible coefficient de frottement, qui est de préférence inférieur à 0,05.

De préférence, l'épaisseur de ce revêtement est inférieure à 50 *µ*m et encore de préférence, inférieure à 30 *µ*m.

De manière particulièrement avantageuse, on observe que le fait de prévoir un revêtement mince sur le joint permet de concilier de bonnes caractéristiques d'étanchéité avec des caractéristiques de faible résistance au frottement.

Un premier exemple d'un tel revêtement est le MoSₓ où x est compris entre 1,5 et y compris 2. De manière particulièrement avantageuse, x est compris entre 1,5 et 1,7, et est proche de 1,6.

De manière avantageuse, on observe qu'en diminuant le facteur x, les propriétés d'autolubrification sont renforcées.

Le disulfure de molybdène (MoS₂) est connu pour ses bonnes propriétés autolubrifiantes. En effet, sa structure, plan-hexagonal (en C7) avec des liaisons covalentes Mo-S et des liaisons faibles par ponts disulfures S-S, comporte de nombreuses surfaces de glissement.

Un autre exemple d'un tel revêtement est le nitrure de titane, appelé plus communément balinit® .

De manière avantageuse, de tels joints pourront être utilisés à des températures particulièrement basses et même cryogéniques, c'est-à-dire inférieures à -80 °C, et pourront également être utilisés pour des températures qui peuvent atteindre 600 et même 800 °C. Dans ces cas de figure, un bon fonctionnement reste assuré.

De tels joints peuvent également être utilisés pour des organes de régulation tels que des vannes à boisseau ou à papillon, résistant à des pressions comprises entre 100 et 200 bars, c'est-à-dire entre 1.10⁷ et 2.10⁷ Pa.

### Exemple de réalisation d'un revêtement sur un joint selon la présente invention

Un dépôt de sulfure de molybdène sur le joint métallique ou céramique est effectué comme suit. Le dépôt s'effectue sous la forme d'un film mince qui est obtenu par sputtering magnétron cathodique d'une cible de molybdène métallique dans une atmosphère de disulfure d'hydrogène et d'argon (0,3 à 0,5 Pa).

La nature du substrat du joint peut être du métal comme l'acier, l'aluminium, le titane, le cuivre, le nickel ou l'un de leurs alliages, ou encore de la céramique. De préférence, la rugosité reste faible, de l'ordre de 0.2 par exemple, de manière à maintenir un très bon fini de la pièce. La température du substrat est comprise entre 100 et 300°C. Le substrat est polarisé à une valeur moyenne de -100 V. La vitesse de dépôt est comprise entre 0,2 et 0,5 µm.min⁻¹. L'épaisseur du dépôt obtenu peut être de manière particulièrement avantageuse comprise entre 0,7 et 28 µm.

D'autres techniques de dépôt peuvent être envisagées, comme la technique PVD ou la technique plasma.

La dureté du dépôt obtenu est comprise entre 2000 et 6000 MPa ; le dépôt présente une bonne adhésion sur le substrat ainsi qu'une bonne stabilité thermique.

Le coefficient de frottement, mesuré dans des conditions standard, est compris entre 0,02 et 0,04. Ces conditions standard consistent à effectuer le test pion/disque, qui peut être réalisé sous atmosphère sèche d'azote contrôlée pour une charge de 5 N et une vitesse de 10⁻² m/s. Le coefficient de friction après 10000 tours est alors mesuré.

En particulier, par rapport aux joints utilisés précédemment, le joint métallique ou céramique revêtu de MoS_{1.6} permet une utilisation à des températures pouvant atteindre 1100 °C sous vide et 700 °C en atmosphère gaz chaud. Une lubrification correcte est encore assurée, tant dans le vide qu'en atmosphère sèche, tant aux températures cryogéniques qu'aux hautes températures. Dans certaines conditions extrêmes, l'usure du joint est beaucoup plus limitée qu'avec les autres matériaux connus utilisés pour des joints classiques tels que des joints en polymère, des joints métalliques non revêtus ou des joints en carbone pour ces diverses applications.

Un autre exemple de conditions extrêmes pour des vannes à papillon selon la présente invention est leur utilisation dans le cas où des fluides particulièrement agressifs tels que l'oxygène et l'acide sont en contact avec les joints d'étanchéité.

Pour optimiser l'étanchéité, la géométrie du joint métallique est choisie de manière telle que le contact du joint sur les faces en vis-à-vis est limité à une zone annulaire (appelée zone de contact). Ceci signifie que la pression locale de contact reste particulièrement élevée sur la zone de contact, c'est-à-dire comprise entre 5 et 50 MPa. Les dimensions de cette zone sont choisies pour obtenir une pression de contact adéquate, qui est un compromis entre les limites des matériaux vis-à-vis du frottement et des caractéristiques d'étanchéité.

Un joint métallique revêtu d'un dépôt de sulfure de molybdène tel que décrit dans l'exemple d'exécution présentera des caractéristiques de tenue mécanique améliorées et moins dispersées (caractéristiques mécaniques du joint plus régulières) par rapport aux joints de l'état de la technique. En particulier, le joint est peu fragile et présente une pression locale de contact relativement élevée.

## Revendications

1. Joint métallique ou céramique revêtu d'une couche mince d'un revêtement présentant un coefficient de frottement inférieur à 0,05.

2. Joint selon la revendication 1, **caractérisé en ce que** l'épaisseur du revêtement est inférieure à 50 µm, et de préférence inférieure à 30 µm.

3. Joint selon la revendication 1 ou 2, **caractérisé en ce que** le revêtement dudit joint est essentiellement constitué de sulfure de molybdène sous la forme MoSₓ où 1,5 ≤ x ≤ 2, de préférence où x est proche de 1,6.

4. Joint selon l'une quelconque des revendications précédentes, **caractérisé en ce que** le revêtement dudit joint est essentiellement constitué de nitrure de carbone.

5. Joint selon l'une quelconque des revendications précédentes, **caractérisé en ce que** la matière du joint est métallique, et de préférence choisie parmi le groupe constitué par l'acier, le titane, l'aluminium, le cuivre, le nickel et leurs alliages.

6. Joint selon l'une quelconque des revendications 1 à 4, **caractérisé en ce que** la matière du joint est céramique.

7. Organe de régulation comprenant un corps de vanne (5), un arbre de commande (3), un obturateur mobile (0), une bague (1) solidaire d'un soufflet métallique (4) et qui permet d'assurer la liaison avec ledit corps de vanne (5), ladite bague (1) s'appuyant sur un joint métallique ou céramique (6) pourvu d'un revêtement, **caractérisé en ce que** le revêtement présente un coefficient de frottement inférieur à 0,05.

8. Organe de régulation selon la revendication 7, **caractérisé en ce que** le revêtement dudit joint est essentiellement constitué de sulfure de molybdène sous la forme MoSₓ où 1,5 ≤ x ≤ 2.

9. Utilisation d'un joint selon l'une quelconque des revendications 1 à 6, pour assurer l'étanchéité d'un organe de régulation aux températures cryogéniques ou aux températures comprises entre 200 et 800 °C.

10. Utilisation d'un joint selon l'une quelconque des revendications 1 à 6, pour assurer l'étanchéité d'un organe de régulation à des pressions comprises entre 10 et 20 MPa.
